# EUROPEAN PATENT SPECIFICATION

(11) **EP 4 080 073 B1**
(45) Date of publication and mention of the grant of the patent: **29.05.2024**
(21) Application number: 22168113.3
(22) Date of filing: 13.04.2022
(51) Int. Cl.: F01D 25/16, F16C 3/14, F01D 25/18, F01M 1/06, F01M 1/16, F16C 9/02, F01M 11/02, F16C 11/02, F16C 33/10

(54) **BEARING SYSTEM AND INTERNAL COMBUSTION ENGINE INCLUDING THE SAME**
LAGERSYSTEM UND VERBRENNUNGSMOTOR, DER DIESES LAGERSYSTEM EINSCHLIESST
SYSTÈME DE PALIER ET MOTEUR À COMBUSTION INTERNE LE COMPRENANT

(30) Priority: 22.04.2021 IT 202100010259
(43) Date of publication of application: 26.10.2022
(73) Proprietor: FPT Motorenforschung AG, 9320 Arbon (CH)
(72) Inventor: GSTREIN, Wolfgang, 9320 Arbon (CH)
(74) Representative: Fiume, Orazio

(56) References cited:
- EP-A1- 2 078 875
- EP-A1- 3 438 424
- DE-A1- 2 633 481
- JP-A- 2007 162 921
- US-A1- 2018 283 243

## Description

### Field of the invention

The present invention relates to the bearings of an internal combustion engine and other components directly or indirectly connected with the internal combustion engine.

### Description of the prior art

The engine oil circuit has two different tasks to cool certain components, to lubricate other components and to lubricate and cool further components.

The engine pistons belong to the first of the above categories, being components that, as such, request only cooling. Instead, all the piston connections: the piston pin, the piston pin bore, the conrod small end, etc.. need lubrication more that cooling.

The bearings are widely adopted in the internal combustion engines to reduce frictions and increase durability of the rotating parts of the engines.

The most stressed bearings are those regarding the crankshaft.

The plain bearings, as a whole, indicates a bearing bore, a shaft rotatable within the bearing bore and a clearance between the rotatable shaft and the bearing bore. The clearance is filled of lubricant in order to define a film capable to reduce the frictions between the rotatable shaft and the bearing bore. These, are well known concepts. Nevertheless, a clear and complete explanation can be found at https://link.springer.com/referenceworkentry/10.1007/978-0-387-92897-5 56.

Usually, the clearance of a lubricated plain bearing is 1/1000 of the diameter. In the following such clearance sizing is named as "traditional".

Therefore, the oil flow is calculated in order to assure sufficient pressure reaching all the engine subsystems.

For example, variable valve actuation need oil pressure to activate engine braking or any other switching between two different operating conditions.

Therefore, the energy spent to pressurize the oil impacts on the overall vehicle consumptions and emissions. Therefore, several schemes are adopted to reduce energy consumption.

US2019040773 discloses at least one flow limiter for reducing a lubricating fluid flow of a lubricating fluid stream passed to the flow limiter and a plurality of crankshaft bearings for the rotatable support of the crankshaft, wherein the plurality of crankshaft bearings is provided in fluid communication downstream of the at least one first flow limiter.

### Summary of the invention

The main object of the present invention to provide a strategy to reduce energy consumption without reducing the engine reliability.

The main principle of the invention is a certain increasing of the clearance of at least one plain bearing of the engine.

The clearance increase have been already considered in the past by the present applicant, however, this solution has been discarded, indeed, according to computer simulations, it has been proved that the clearance increase would increase the oil flow at the oil pump to guarantee the optimal pressurization of all the engine subsystems.

In other words, it has been proven that the gain in terms of frictions reduction is compensated by the pumping work developed by the oil pump.

The present invention, instead, proposes a clearance increase of the plain bearings in connection with the throttling of the oil bore of the corresponding plain bearing.

In other words, the oil flow is maintained unchanged with respect to the traditional clearance, while the clearance is increased.

More in detail, according to the present invention, the clearance is increased between 40% - 70% with respect to the traditional one.

According to a preferred implementation of the invention, not all the crankshaft bearings are subjected to the present strategy.

Some of the crankshaft bearings, also called "main bearings" are arranged at one end of an oil supply passage reaching at least one crank pin. Therefore, said bearings define an intermediate hydraulic joint towards the crank pin.

According to the present invention, those plain bearings, defining an intermediate hydraulic joint, have an unchanged clearance in order to permit the correct crank pin lubrication, while the other remaining main bearings have an increase clearance according to the present invention. The present invention finds application also in other engine subsystems, such as camshaft bearings, turbocharger bearings, fuel injection pump bearings and in any of the plain bearings oil lubricated by the main gallery of the engine lubrication system.

In the heavy-duty vehicles, the brakes and/or suspensions are supplied with compressed air, and the air compressor is lubricated by means of the engine oil main gallery. Also in that case, the bearings can be modified according to the present invention.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:

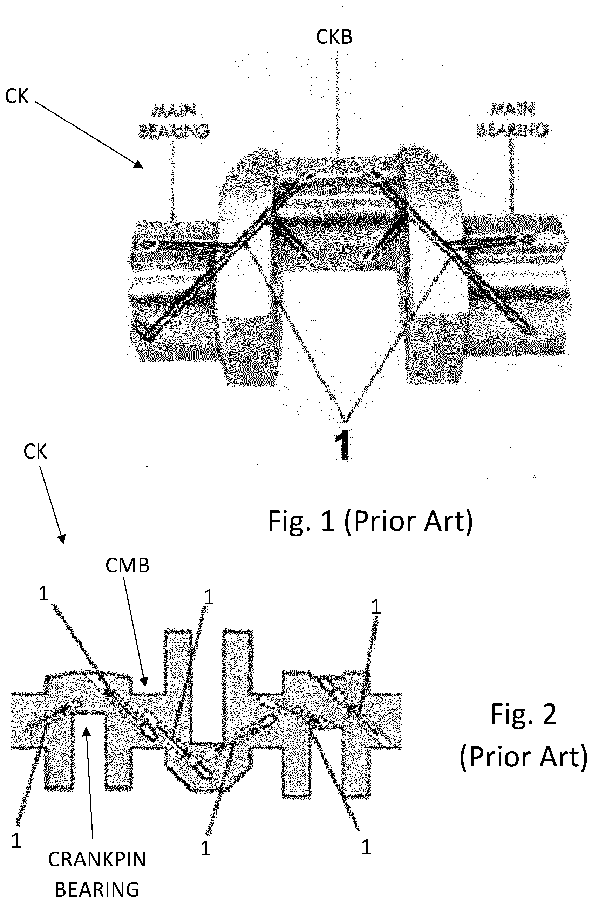

- Fig. 1 shows a prior art crankshaft with oil passages connecting main bearing the crankpin bearings;
- Fig. 2 shows another prior art crankshaft figure similar to figure 1;

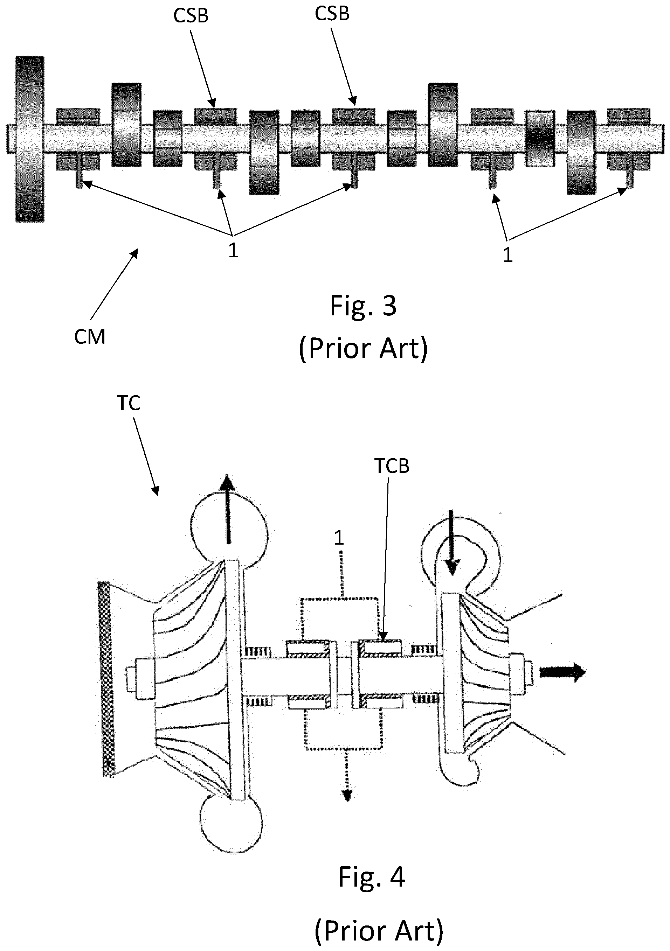

- Fig. 3 shows a prior art camshaft;
- Fig. 4 shows a prior art turbocharger;
- Fig. 5 discloses the present invention that fits to any of the applications disclosed in the previous figures.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

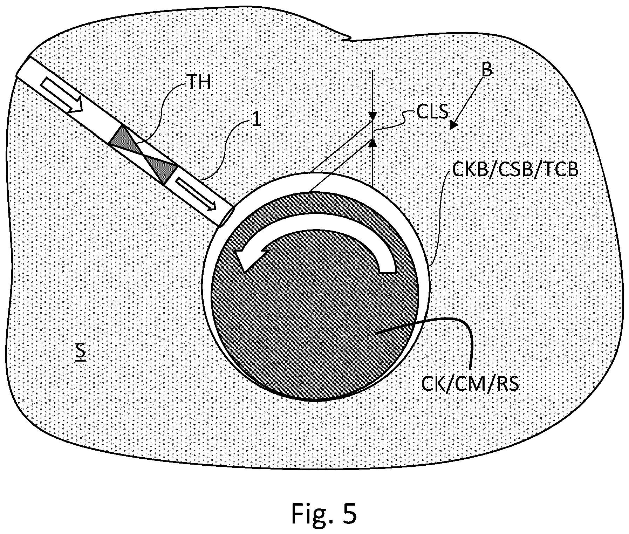

According to figure 5, the present invention includes
1) increasing the clearance CLS between a rotating shaft CK, CM, RS and a corresponding bearing bore CKB, CSB, TCB defining the plain bearing B and
2) throttling the oil passage 1 arranged to lubricate the contacting surfaces between rotating shaft or in the bearing bore, such as the oil flow remains unchanged in consequence of the above clearance increasing.

Therefore, the results are a clearance increase of about 40 - 70% with respect to the rated clearance with the same oil consumption. This means that the total flow at the oil pump remains unchanged.

The clearance increase leads to frictions reduction, while the oil passage throttling maintains unchanged the burden of the oil pump pressurizing the lubricating circuit.

Figure 5 indicates, for example, the shaft rotates counterclockwise in a bore CKB/CSB/TCB arranged in a generic element S, which can be fixed or movable.

The oil passage is preferably arranged in such a way the oil enters in the clearance such as to be immediately dragged in the angular sector where there is the higher contact between the sliding surfaces.

According to figure 5 the oil passage is arranged in the component supporting the bearing bore CKB, CSB, TCB, nevertheless, the oil passage could be arranged in the same shaft coupled with the bearing bore to define a plain bearing.

The present invention finds optimal implementation in the field of the internal combustion engines and in the field of air compressors.

In particular, the present solution can be implemented to lubricate a crankshaft CK and/or a camshaft CM.

Another preferred implementation is in the field of turbochargers TC.

In the field of turbochargers, further considerations can be provided: when the plain bearings of a turbocharger fails, a great amount of lubricating oil, usually provided by the main gallery of the internal combustion engine, is pumped through the damaged plain bearing towards the internal combustion engine intake with the result that it is quite impossible to switch off the engine, if the latter is a compression/ignition one.

The oil passage throttling is such that the oil flow remains unchanged independently from the bearing/shaft clearance. Therefore, the oil flow, even in case of bearing failure, being limited, is not sufficient to maintain on the internal combustion engine. Therefore, the present invention, beyond the general reduction of frictions, in the field of turbochargers, reaches a further result. About the crankshaft of a combustion engine or of a compressor, it is preferably implemented a configuration where the bearings working as hydraulic joint to provide oil to a further bearing are left unchanged in terms of clearance to assure the sufficient pressure of the oil which has to reach the further bearing, for example the crankpin bearing (CRANKPIN BEARING), while the plain bearings which are "only" bearings can be modified according to the present invention.

Preferably, when the clearance is left unchanged also the corresponding oil passage is left without throttling. Therefore, throttling is paired only with clearance increasing.

Therefore, according to the present invention, a crankshaft can be supported by a bearing bore by defining with it a rated-clearance to feed crankpin plain bearings with increased-clearance.

According to the present invention, the throttling realized in the oil passage defines a fixed throttling and can be realized through calibrated passages or through the fitting of a calibrated valve in a larger oil passage, before the bearing installation.

The experiments disclose a VECTO (Vehicle Energy Consumption calculation) reduction between 0.25 and 0.35% which impacts on the fuel consumption reduction and pollutants emissions reductions.

Example embodiments are provided so that this disclosure will be thorough, and will fully convey the scope to those who are skilled in the art.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. A set including a crankshaft (CK) and a bearing bore (CKB), where a portion of the crankshaft is rotatable within the bearing bore, defining one journal bearing (B), wherein the bearing includes at least an oil passage (1) defined within the crankshaft portion or in the bearing bore to lubricate said journal bearing with an oil flow, wherein the oil flow is defined exclusively by an oil pressurization and a calibrated throttling defined in said oil passage, and wherein said journal bearing defines a clearance (CLS) increased of about 40 to 70% with respect to a corresponding rated clearance, wherein the rated clearance is about 1/1000 of a diameter of the crankshaft.

2. A set including a camshaft (CM) and a bearing bore (CSB) where a portion of the camshaft is rotatable within the bearing bore, defining one journal bearing (B), wherein the bearing includes at least an oil passage (1) defined within the camshaft (CM) or in the bearing bore to lubricate said bearing with a oil flow, wherein the oil flow is defined exclusively by an oil pressurization and a calibrated throttling defined in said oil passage, and wherein said journal bearing defines a clearance (CLS) increased of about 40 to 70% with respect to a corresponding rated clearance, wherein the rated clearance is about 1/1000 of a diameter of the camshaft.

3. A set including a turbocharger (TC) for an internal combustion engine and a bearing bore (TCB) where a rotating shaft (RS) of the turbocharger is rotatable within the bearing bore defining one journal bearing (TCB) to support said shaft in rotation and at least an oil passage (1) defined within the rotating shaft or in the bearing bore to lubricate said bearing with a oil flow, wherein said oil passage is arranged to be connected to a main gallery of the internal combustion engine, wherein the oil flow is defined exclusively by an oil pressurization and a calibrated throttling defined in said oil passage, and wherein said journal bearing defines a clearance (CLS) increased of about 40 to 70% with respect to a corresponding rated clearance, wherein the rated clearance is about 1/1000 of a diameter of the rotating shaft.

4. The set according to any one of claims 1 - 3, wherein said oil flow is equal to an oil flow defined in the journal bearing exclusively by the rated clearance, leaving unchanged the oil pressurization.

5. The set according to claim 1 or 2, comprising a plurality of journal bearings, wherein a first subset of said bearings define an intermediate hydraulic joint to lubricate a further bearing, such as a crankpin bearing (CRANKPIN BEARING), wherein each bearing of said first subset of bearings have a rated clearance and the remaining journal bearings are provided of a calibrated throttling defined in said oil passage, and have a clearance (CLS) increased of about 40 to 70% with respect to the corresponding rated clearance.

6. An internal combustion engine or an air compressor comprising a crankshaft according to claim 1 and/or a camshaft according to claim 2.

7. An internal combustion engine comprising a turbocharger (TC) according to claim 3.

8. Method to lubricate a journal bearing defined by a rotating shaft of an internal combustion engine rotatably coupled with a bearing bore (CKB, SCB, TCB), said rotating shaft being a portion of a crankshaft and/or a camshaft and/or a turbocharger shaft and/or an air compressor shaft, the method comprising the following:
- first step: increasing the bearing clearance (CLS) of 40 to 70% with respect to a rated clearance, wherein the rated clearance is about 1/1000 of a diameter of the rotating shaft,
- second step: maintaining unchanged an oil flow reaching the clearance by means of a calibrated throttling (TH) arranged in an oil passage (1) defined in the portion or in the bearing bore.

9. Method according to claim 8, wherein said oil flow is equal to an oil flow defined in a corresponding journal bearing with a rated clearance, with the same oil pressurization.

10. Method according to any one of the claims 8 - 10, wherein said rotating shaft comprises a plurality of bearings, wherein a first subset of said bearings define an intermediate hydraulic joint to lubricate a further bearing, such as a crankpin bearing (CRANKPIN BEARING), wherein the above first and second steps are carried out exclusively on the remaining bearings with respect to said first subset, while the bearings of the first subset are sized to have rated clearance.

## Patentansprüche

1. Satz bestehend aus einer Kurbelwelle (CK) und einer Lagerbohrung (CKB), wobei ein Teil der Kurbelwelle innerhalb der Lagerbohrung drehbar ist und ein Gleitlager (B) definiert, wobei das Lager mindestens einen definierten Ölkanal (1) umfasst innerhalb des Kurbelwellenabschnitts oder in der Lagerbohrung, um das Gleitlager mit einem Ölfluss zu schmieren, wobei der Ölfluss ausschließlich durch eine Öldruckbeaufschlagung und eine kalibrierte Drosselung definiert wird, die in dem Ölkanal definiert ist, und wobei das Gleitlager ein Spiel (CLS) ein Spiel definiert, das um etwa 40-70 % im Vergleich zu einem entsprechenden Nennspiel vergrößert ist, wobei das Nennspiel etwa 1/1000 des Nenndurchmessers der Kurbelwelle beträgt.

2. Satz bestehend aus einer Nockenwelle (CM) und einer Lagerbohrung (CSB), wobei ein Teil der Nockenwelle innerhalb der Lagerbohrung drehbar ist und ein Gleitlager (B) definiert, wobei das Lager mindestens einen Ölkanal (1) aufweist, der innerhalb der Nockenwelle (CM) oder in der Lagerbohrung definiert ist, um das Lager mit einem Ölfluss zu schmieren, wobei der Ölfluss ausschließlich durch eine Öldruckbeaufschlagung und eine kalibrierte Drosselung definiert wird, die in dem Ölkanal definiert ist, und wobei das Gleitlager ein Spiel (CLS) definiert, das um etwa 40-70 % im Vergleich zu einem entsprechenden Nennspiel vergrößert ist, wobei das Nennspiel etwa 1/1000 des Nenndurchmessers der Nockenwelle beträgt.

3. Satz, der einen Turbolader (TC) für einen Verbrennungsmotor und eine Lagerbohrung (TCB) umfasst, wobei eine drehende Welle (RS) des Turboladers innerhalb der Lagerbohrung drehbar ist und ein Gleitlager (TCB) definiert, um die Welle in Rotation zu halten, und mit mindestens einem Ölkanal (1), der innerhalb der drehenden Welle oder in der Lagerbohrung definiert ist, um das Lager mit einem Ölfluss zu schmieren, wobei der Ölkanal so angeordnet ist, dass er mit einem Hauptkanal des Verbrennungsmotors verbunden wird, wobei der Ölfluss ausschließlich durch eine Öldruckbeaufschlagung und eine kalibrierte Drosselung definiert ist, die in dem Ölkanal definiert ist, und wobei das Gleitlager ein Spiel (CLS) definiert, das im Vergleich zu einem entsprechenden Nennspiel um etwa 40-70 % vergrößert ist, wobei das Nennspiel etwa 1/1000 des Nenndurchmessers der drehenden Welle beträgt.

4. Satz nach einem der Ansprüche 1-3, wobei der Ölfluss einem Ölfluss entspricht, der in einem Gleitlager ausschließlich durch das Nennspiel definiert wird, wobei der Öldruck unverändert bleibt.

5. Satz nach Anspruch 1 oder 2, umfassend eine Vielzahl von Gleitlagern, wobei eine erste Teilmenge der Lager eine hydraulische Zwischenverbindung definiert, um ein weiteres Lager zu schmieren, beispielsweise ein Kurbelzapfenlager (CRANKPIN BEARING), wobei jedes Lager der ersten Teilmenge der Lager ein Nennspiel aufweist, und die übrigen Gleitlager mit einer kalibrierten Drosselung versehen sind, die in dem Ölkanal definiert ist, und ein Spiel (CLS) aufweisen, das im Vergleich zu einem entsprechenden Nennspiel um etwa 40-70 % vergrößert ist.

6. Verbrennungsmotor oder Luftkompressor, umfassend eine Kurbelwelle nach Anspruch 1 und/oder eine Nockenwelle nach Anspruch 2.

7. Verbrennungsmotor, der einen Turbolader (TC) nach Anspruch 3 umfasst.

8. Verfahren zum Schmieren eines Gleitlagers, das durch eine rotierende Welle eines Verbrennungsmotors definiert ist, die drehbar mit einer Lagerbohrung (CKB, SCB, TCB) gekoppelt ist, wobei die rotierende Welle ein Teil einer Kurbelwelle und/oder einer Nockenwelle und/oder einer Turboladerwelle und/oder eine Welle des Luftkompressors ist, wobei das Verfahren Folgendes umfasst:
- erster Schritt: Erhöhung des Lagerspiels (CLS) von 40 - 70 % bezogen auf das Nennspiel, wobei das Nennspiel etwa 1/1000 des Nenndurchmessers der rotierenden Welle beträgt,
- zweiter Schritt: Unverändertes Aufrechterhalten eines Ölflusses, der das Spiel mittels einer kalibrierten Drosselung (TH) erreicht, die in einem Ölkanal (1) angeordnet ist, der im Teil oder in der Lagerbohrung definiert ist.

9. Verfahren nach Anspruch 8, wobei der Ölfluss gleich einem Ölfluss ist, der in einem entsprechenden Gleitlager mit einem Nennspiel und demselben Öldruck definiert ist.

10. Verfahren nach einem der Ansprüche 8 bis 10, wobei die rotierende Welle eine Vielzahl von Lagern umfasst, wobei eine erste Teilmenge der Lager eine hydraulische Zwischenverbindung definiert, um ein weiteres Lager, beispielsweise ein Kurbelzapfenlager (CRANKPIN BEARING), zu schmieren. wobei die obigen ersten und zweiten Schritte ausschließlich an den verbleibenden Lagern in Bezug auf die erste Teilmenge durchgeführt werden, während die Lager der ersten Teilmenge so dimensioniert sind, dass sie ein Nennspiel aufweisen.

## Revendications

1. Ensemble comprenant un vilebrequin (CK) et un alésage de palier (CKB), dans lequel une partie du vilebrequin peut tourner à l'intérieur de l'alésage de palier, définissant un palier lisse (B), le roulement comprenant au moins un passage d'huile (1) défini à l'intérieur de la partie de vilebrequin ou dans l'alésage de palier pour lubrifier ledit palier lisse avec un débit d'huile, le débit d'huile étant défini exclusivement par une pressurisation d'huile et un étranglement calibré défini dans ledit passage d'huile, et ledit palier lisse définissant un jeu (CLS) augmenté d'environ 40 à 70 % par rapport à un jeu nominal correspondant, dans lequel le jeu nominal est d'environ 1/1000 d'un diamètre du vilebrequin.

2. Ensemble comprenant un arbre à cames (CM) et un alésage de palier (CSB) dans lequel une partie du vilebrequin peut tourner à l'intérieur de l'alésage de palier, définissant un palier lisse (B), le palier comprenant au moins un passage d'huile (1) défini à l'intérieur de l'arbre à cames (CM) ou dans l'alésage de palier pour lubrifier ledit palier avec un débit d'huile, dans lequel le débit d'huile est défini exclusivement par une pressurisation d'huile et un étranglement calibré défini dans ledit passage d'huile, et dans lequel ledit palier lisse définit un jeu (CLS) augmenté d'environ 40 à 70 % par rapport à un jeu nominal correspondant, dans lequel le jeu nominal est d'environ 1/1000 d'un diamètre du vilebrequin.

3. Ensemble comprenant un turbocompresseur (TC) pour un moteur à combustion interne et un alésage de palier (TCB) dans lequel un arbre (RS) du turbocompresseur peut tourner à l'intérieur de l'alésage de palier définissant un palier lisse (TCB) pour supporter ledit arbre en rotation et à au moins un passage d'huile (1) défini à l'intérieur de l'arbre en rotation ou dans l'alésage de palier pour lubrifier ledit palier avec un débit d'huile, ledit passage d'huile étant agencé pour être relié à une galerie principale du moteur à combustion interne, dans lequel le débit d'huile est défini exclusivement par une pressurisation d'huile et un étranglement calibré défini dans ledit passage d'huile, et dans lequel ledit palier lisse définit un jeu (CLS) augmenté d'environ 40 à 70 % par rapport à un jeu nominal correspondant, dans lequel le jeu nominal est d'environ 1/1000 d'un diamètre de l'arbre en rotation.

4. Ensemble selon l'une quelconque des revendications précédentes 1 à 3, dans lequel ledit débit d'huile est égal à un débit d'huile défini dans un palier lisse exclusivement par le jeu nominal, laissant inchangée la pressurisation de l'huile.

5. Ensemble selon la revendication 1 ou 2, comprenant une pluralité de paliers lisses, dans lequel un premier sous-ensemble desdits paliers définit un joint hydraulique intermédiaire pour lubrifier un autre palier, tel qu'un roulement de maneton (CRANKPIN BEARING), dans lequel chaque palier dudit premier sous-ensemble de paliers a un jeu nominal et les paliers lisses restants sont dotés d'un étranglement calibré défini dans ledit passage d'huile, et ont un jeu (CLS) augmenté d'environ 40 à 70 % par rapport au jeu nominal correspondant.

6. Moteur à combustion interne ou compresseur d'air comprenant un vilebrequin selon la revendication 1 et/ou un arbre à cames selon la revendication 2.

7. Moteur à combustion interne comprenant un turbocompresseur (TC) selon la revendication 3.

8. Procédé pour lubrifier un palier lisse défini par un arbre rotatif d'un moteur à combustion interne couplé en rotation à un alésage de palier (CKB, SCB, TCB), ledit arbre rotatif étant une partie d'un vilebrequin et/ou d'un arbre à cames et/ou d'un arbre de turbocompresseur et/ou un arbre de compresseur d'air, le procédé comprenant les étapes suivantes:
- première étape : augmenter le jeu des paliers (CLS) de 40 à 70% par rapport à un jeu nominal, dans lequel le jeu nominal est d'environ 1/1000 d'un diamètre de l'arbre rotatif,
- deuxième étape : maintenir inchangé un débit d'huile atteignant le jeu au moyen d'un étranglement calibré (TH) disposé dans un passage d'huile (1) défini dans la portion ou dans l'alésage de palier.

9. Procédé selon la revendication 8, dans lequel ledit débit d'huile est égal à un débit d'huile défini dans un palier lisse correspondant avec un jeu nominal, avec la même pressurisation d'huile.

10. Procédé selon l'une quelconque des revendications 8 à 10, dans lequel ledit arbre rotatif comprend une pluralité de paliers, dans lequel un premier sous-ensemble desdits palier définit un joint hydraulique intermédiaire pour lubrifier un autre palier, tel qu'un roulement de maneton (CRANKPIN BEARING), dans lequel les première et deuxième étapes ci-dessus sont effectuées exclusivement sur les paliers restants par rapport audit premier sous-ensemble, tandis que les paliers du premier sous-ensemble sont dimensionnés pour avoir un jeu nominal.
